# EUROPÄISCHE PATENTSCHRIFT

(11) **EP 4 093 183 B1**
(45) Veröffentlichungstag und Bekanntmachung des Hinweises auf die Patenterteilung: **22.05.2024**
(21) Anmeldenummer: 22700628.5
(22) Anmeldetag: 13.01.2022
(51) Int. Cl.: A01G 7/04, A01G 9/24

(54) **PFLANZENAUFZUCHTEINRICHTUNG**
PLANT CULTIVATION DEVICE
DISPOSITIF DE CULTURE DE PLANTES

(30) Priorität: 13.01.2021 DE 102021200267
(43) Veröffentlichungstag der Anmeldung: 30.11.2022
(73) Patentinhaber: 4S Aachen GmbH, 52074 Aachen (DE)
(72) Erfinder: KÖHLER, Florian, 52064 Aachen (DE)
(74) Vertreter: Jostarndt Patentanwalts-AG
(86) Internationale Anmeldenummer: PCT/EP2022/050654
(87) Internationale Veröffentlichungsnummer: WO 2022/152797

(56) Entgegenhaltungen:
- WO-A1-2010/004489
- WO-A1-2020/227712
- CN-A- 112 015 212
- US-A1- 2015 128 489
- US-A1- 2018 028 700
- US-A1- 2018 288 944
- US-A1- 2019 259 108
- US-B1- 10 842 082

## Beschreibung

Die vorliegende Erfindung betrifft eine Pflanzenaufzuchteinrichtung zur Wachstumsoptimierung von Pflanzen, abhängig von ihren Wachstumsstadien und Photosyntheseraten. Eine solche Einrichtung weist eine Bewässerungseinrichtung, eine Beleuchtungseinrichtung, einen Aufnahmeraum zum Aufnehmen von Trägersubstrat und Saatgut, eine Steuerungseinheit, die eingerichtet ist mittels einer Software die optimalen Bedingungen zu ermitteln und die Bewässerungseinrichtung und die Beleuchtungseinrichtung zu steuern und einen oder mehrere Sensoren zum Ermitteln der Feuchte der Luft und/oder des Substrats auf.

US 10 842 082 B1, CN 112 015 212 A offenbaren den einschlägigen Stand der Technik.

Aufgabe von Ausführungsformen der Erfindung ist es, ein System bereitzustellen, das die Aufzucht von Pflanzen voll- und/oder halbautomatisch übernehmen kann und die Pflanzen in ihrem Wachstum unterstützen kann, indem sie ihnen die für sie optimalen Parameter zur Verfügung stellt. Dieses System soll außerdem in seinem Energieverbrauch optimiert werden.

Gelöst wird diese Aufgabe durch den Gegenstand des unabhängigen Anspruchs. Vorteilhafte Weiterbildungen sind Gegenstand der abhängigen Ansprüche.

Die Maßnahme, dass mehrere Lichtquellen oberhalb und/oder seitlich und/oder unterhalb der Pflanze von der Steuerungseinheit so gesteuert werden, dass die Wuchsrichtung der Pflanze entlang von Krümmungsradien so gewählt wird, dass die Flächennutzung der Trägersubstrate gesteigert wird, beinhaltet zahlreiche Vorteile und kann auf mannigfaltige Weise realisiert werden.

Hierdurch kann, das Prinzip, dass Wachstumsvorgänge von Pflanzen in Richtung des Einfalls von Licht erfolgen zu einer gezielten Formung der Pflanze(n) eingesetzt werden, insbesondere, indem die Beleuchtungseinrichtung so ausgestaltet ist, dass Licht entlang voneinander verschiedener Lichtkegel eingestrahlt werden kann und dass Licht im Bereich eines erster Lichtkegel, in dessen Bereich das Pflanzenwachstum stärker gesteigert werden soll als im Bereich eines zweiten Lichtkegels mit einer höheren Intensität eingestrahlt wird als im Bereich des zweiten Lichtkegels.

Eine besonders vorteilhafte Ausgestaltung der Erfindung sieht vor, dass mehrere Lichtquellen an verschiedenen Stellen angeordnet sind und dass eine Intensität von Lichtquellen in den Bereichen, in denen ein stärkeres Pflanzenwachstum erfolgen soll als in den Bereichen, in denen ein schwächeres Pflanzenwachstum erfolgen soll größer geregelt wird als eine Intensität von Lichtquellen in den Bereichen, in denen ein schwächeres Pflanzenwachstum erfolgen soll.

Erfindungsgemäß ist die Pflanzenaufzuchteinrichtung mit einer Erfassungseinheit für eine räumliche Ausdehnung von Pflanzen versehen. Dies ermöglicht eine besonders vorteilhafte Anpassung der Beleuchtungsparameter.

Die Anpassung der Beleuchtungsparameter wird zweckmäßigerweise zu einer möglichst guten Ausnutzung eines Volumens der Pflanzenaufzuchteinrichtung und/oder zu einer Verhinderung einer Abschattung von tiefer liegenden Teilen der Pflanzen durch höher liegende Bestandteile der Pflanzen eingesetzt.

In einer vorteilhaften Weiterbildung der Pflanzenaufzuchteinrichtung kann die Erfassungseinheit für die räumliche Ausdehnung von Pflanzen eine optische Auswerteeinheit eine oder mehrere Kameras umfassen, die zusätzlich zu dem sichtbaren Spektrum auch das IR-Spektrum aufnehmen können. Dies bietet den Vorteil, dass neben der Möglichkeit der Erkennung der Pflanzenart und deren Wachstumsstadium auch die Vitalität der Pflanze anhand ihrer Reflektanz erkannt werden kann.

Eine zweckmäßige Ausführungsform der Erfindung zeichnet sich dadurch aus, dass die Beleuchtungseinrichtung so ausgestaltet ist, dass Licht entlang voneinander verschiedener Lichtkegel eingestrahlt werden kann und dass Licht im Bereich eines erster Lichtkegel, in dessen Bereich das Pflanzenwachstum stärker gesteigert werden soll als im Bereich eines zweiten Lichtkegels mit einer höheren Intensität eingestrahlt wird als im Bereich des zweiten Lichtkegels.

Erfindungsgemäß ist die Pflanzenaufzuchteinrichtung mit einer Erfassungseinheit zum Erfassen einer räumlichen Ausdehnung von Pflanzen versehen, sodass die Erfassungseinheit die erfasste räumliche Ausdehnung der Pflanzen an eine Auswerteeinheit übermittelt kann. Die Auswerteeinheit ist so eingerichtet, dass sie einen Vergleich zwischen der erfasste räumliche Ausdehnung der Pflanzen und Sollwerten für die räumliche Ausdehnung der Pflanzen durchführen kann und dass die Auswerteeinheit in Abhängigkeit des Vergleich zwischen der erfassten räumliche Ausdehnung der Pflanzen und den Sollwerten für die räumliche Ausdehnung der Pflanzen Daten für eine Anpassung der Beleuchtungsparameter generieren und an die Steuerungseinheit übermitteln kann.

Eine zweckmäßige Ausführungsform der Erfindung zeichnet sich dadurch aus, dass Beleuchtungsparameter der Beleuchtungseinrichtung angepasst werden und dass mehrere Lichtquellen oberhalb und/oder seitlich und/oder unterhalb der Pflanze von der Steuerungseinheit so gesteuert werden, dass die Wuchsrichtung der Pflanze entlang von Krümmungsradien so gewählt wird, dass die Flächennutzung der Trägersubstrate gesteigert wird.

Eine vorteilhafte Weiterbildung der Erfindung sieht vor, dass die Beleuchtungsparameter der Beleuchtungseinrichtung so angepasst werden, dass Licht entlang voneinander verschiedener Lichtkegel eingestrahlt wird und dass Licht im Bereich eines erster Lichtkegel, in dessen Bereich das Pflanzenwachstum stärker gesteigert werden soll als im Bereich eines zweiten Lichtkegels mit einer höheren Intensität eingestrahlt wird als im Bereich des zweiten Lichtkegels.

Eine zweckmäßige Ausführungsform der Erfindung zeichnet sich dadurch aus, dass einer Erfassungseinheit eine räumliche Ausdehnung von Pflanzen erfasst, dass die die Erfassungseinheit die erfasste räumliche Ausdehnung der Pflanzen an eine Auswerteeinheit übermittelt, dass die Auswerteeinheit einen Vergleich zwischen der erfassten räumlichen Ausdehnung der Pflanzen und Sollwerten für die räumliche Ausdehnung der Pflanzen durchführt und dass die Auswerteeinheit in Abhängigkeit des Vergleich zwischen der erfassten räumliche Ausdehnung der Pflanzen und den Sollwerten für die räumliche Ausdehnung der Pflanzen Daten für eine Anpassung der Beleuchtungsparameter generiert und an die Steuerungseinheit übermittelt.

Erfindungsgemäß wird eine optische Auswerteeinheit der Pflanzenaufzuchteinrichtung zur Bestimmung der Pflanzenart und ihres Wachstumsstadiums, ihrer Vitalität und zur Diagnose von Schimmelbefall eingesetzt und zur Förderung des Pflanzenwachstums folgend einer ermittelten Korrelation zwischen den Beleuchtungsparametern und der gemessenen Photosyntheserate und/oder dem gemessenen Pflanzenwachstum die Beleuchtungsparameter der Beleuchtungseinrichtung anpasst werden.

Erfindungsgemäß wird diese Aufgabe durch eine Pflanzenaufzuchteinrichtung nach Anspruch 1 gelöst.

Dies hat die Vorteile, dass die Pflanzen in ihrer gesamten Entwicklung überwacht werden, und dass sie die für ihre Art und derzeitige Wachstumsphase optimale Versorgung bekommen, abhängig von der ermittelten Korrelation.

Die Beleuchtungseinheit weist mehrere Lichtquellen oberhalb und/oder seitlich und/oder unterhalb der Pflanze auf. Dies hat den Vorteil, dass sämtliche Bereiche der Pflanze einzeln ausgeleuchtet werden können und die Pflanze auf Krümmungsradien in der Fläche wachsen kann. Die von der Steuerungseinheit veränderbaren Parameter können den Abstand der Lichtquellen zu den Pflanzen und/oder den Abstrahlwinkel und/oder die Intensität und/oder die spektrale Zusammensetzung des emittierten Lichts der Lichtquelle oder der Lichtquellen umfassen. Dies hat den Vorteil, dass eine hohe Präzision bei der Anpassung mittels der Steuerungseinrichtung an die Bedürfnisse der Pflanze möglich ist. Ferner können Stellen an der Pflanze, die beispielsweise von ihren Blättern verdeckt werden, mithilfe der vorliegenden Weiterbildung ausgeleuchtet werden und die Flächennutzung durch ein Wachstum in die Breite erhöht werden.

In vorteilhafter Weiterbildung kann die optische Auswerteeinheit eine oder mehrere Kameras umfassen, die zusätzlich zu dem sichtbaren Spektrum auch das IR-Spektrum aufnehmen können. Dies bietet den Vorteil, dass neben der Möglichkeit der Erkennung der Pflanzenart und deren Wachstumsstadium auch die Vitalität der Pflanze anhand ihrer Reflektanz erkannt werden kann. Weiter kann die Auswerteeinheit in der Lage sein über eine Software zu ermitteln, wo sich die aktiven Lichtquellen befinden und ihren Abstand zu den Pflanzen sowie ihren Abstrahlwinkel zu erkennen. Das Erkennen der Pflanzenart und ihres Wachstumsstadiums kann über ein Abgleichen mit einer Datenbank, wie sie bei einigen Apps bereits verwendet wird, stattfinden. Weiterhin kann die Auswerteeinheit darauf programmiert sein, zu erkennen, ob eine Pflanze von Schimmel befallen ist und/oder auf die Photosyntheserate der Pflanze schließen. Das Ermitteln der Photosyntheserate erfolgt durch Ausnutzen der Chlorophyllfluoreszenz. Dabei nehmen die Pflanzen die Energie des Lichts im Chlorophyll auf und leuchten bei der Photosynthese schwach im roten Bereich. Dieses Leuchten kann als Indikator genutzt werden, um Rückschluss auf die Photosyntheseaktivität der Pflanze zu ziehen.

Die LEDs der Beleuchtungseinrichtung können zusätzlich Licht im UV- und IR-Spektrum emittieren und bei Bedarf von der Steuerungseinheit hinzugeschaltet werden. Es hat sich gezeigt, dass bestimmte spektrale Anteile des UV-Lichts positive Auswirkungen auf das Pflanzenwachstum, insbesondere gegen Ende ihrer Blütezeit, haben können. Außerdem kann mithilfe der UV-LEDs Schimmel bekämpft werden. Die IR-Strahlung kann bei der Ermittlung der Vitalität eingesetzt werden.

In weiterer Ausgestaltung kann die Pflanzenaufzuchteinrichtung eine Ventilationseinrichtung umfassen. Diese kann genutzt werden, um Schimmel zu bekämpfen und in der Blütezeit die Pflanzen zu bestäuben.

Unterstützend überwacht die Steuerungseinheit mithilfe der Substrat- und/oder Luftfeuchtesensoren die Feuchtigkeit und steuert bereits ab einem Feuchtigkeitsschwellenwert die UV-LEDs und/oder Ventilationseinrichtung so, dass die Schimmelbildung verhindert wird.

Die Bewässerungseinrichtung der Pflanzenaufzuchteinrichtung kann durch offene Kanäle ausgebildet sein. Die offenen Kanäle verbessern den Luftaustausch und tragen durch die bessere Belüftung der Wurzeln zur Wurzelatmung bei. Dies resultiert in einer höheren Nährstoffaufnahme der Pflanze. In dieser Weiterbildung ist die Verwendung von Sensoren zur Messung eines Leitwerts hinsichtlich der Qualität des zu- und abgeführten Wassers vorgesehen. Somit kann ein Rückschluss über die Transporteigenschaften des Wassers und dessen Zusammensetzung gezogen werden. Es sind aber auch andere Sensoren, beispielsweise zur Messung des pH-Wertes des Wassers, denkbar. So kann der Nutzer Informationen über die Nährstoffkonzentration der Lösung erlangen und bei Bedarf anpassen.

In einer Ausgestaltung der Erfindung kann die Ermittlung der Photosyntheserate mithilfe eines Gassensors erfolgen, der in der Lage ist, den CO2- und/oder O2-Gehalt der Luft zu bestimmen und daraus abzuleiten, wie viel Photosynthese die Pflanze betreibt. Das Wissen um den CO2-Wert der die Pflanze umgebenden Luft ist von hoher Bedeutung, da die Photosyntheserate von dem für die Photosynthese zur Verfügung stehenden CO2 abhängt und somit die optimalen Lichtparameter, insbesondere die Lichtintensität, einer Pflanze angepasst werden müssen. Das unterstreicht die Wichtigkeit der Software, die zur Ermittlung der Korrelation eingesetzt wird, da diese in der Lage ist, die Bedingungen für jede Pflanze optimal anhand der gemessenen Daten anzupassen. So dienen die in der Datenbank hinterlegten Werte als Ausgangspunkt für die Steuerungseinheit von dem anschließend anhand der ermittelten Korrelation sukzessive die Beleuchtungsparameter angepasst werden.

Die Pflanzenaufzuchteinrichtung kann von der Außenluft abgeriegelt sein. Daraus folgt eine erhöhte Präzision des Sensors zur Ermittlung der Photosyntheserate.

In einer Ausgestaltung der Erfindung kann die Steuerungseinheit zur Erfassung der Korrelation ein PID-Regler sein. Dies bietet den Vorteil, dass neben linearer Zusammenhänge zwischen der Pflanzenentwicklung und den Lichtparametern auch integrale oder differentielle Zusammenhänge erfasst werden. Insbesondere ist die Steuerung derart programmiert, dass bei Erreichen einer Wachstumssättigung die Intensität der Lichtquellen nicht weiter erhöht wird. Dies hat neben der zuvor angesprochenen Verhinderung der Beschädigung der Pflanzen auch den Vorteil, dass Stromkosten eingespart werden.

Insgesamt kann die Steuerungseinrichtung in Kombination mit der optischen Auswerteeinheit dahingehend in der Art von Machine-Learning trainiert werden, dass sie die Pflanzen entlang von Krümmungsradien in der Fläche wachsen lässt und somit eine Steigerung der Flächennutzung der Trägersubstrate erzielt.

In einer weiteren Ausgestaltung ist die Pflanzenaufzuchteinrichtung modular vertikal erweiterbar, indem mehrere Pflanzenaufzuchteinrichtungen in der Art von Trägern eines Regals gestapelt werden. Dies kann den gewerblichen Nutzen der Ausführung durch eine mögliche Vervielfachung des Ertrags pro Fläche steigern.

In einer besonders vorteilhaften Weiterbildung kann die Programmsteuerung der Steuerungseinrichtung durch ein lernendes oder selbstlernendes System implementiert sein. Ein solches System kann beispielsweise durch ein neuronales Netz ausgebildet sein und sich über teilüberwachtes Lernen, bestärkendes Lernen, aktives Lernen oder selbstständiges Lernen entwickeln. Dies bietet den Vorteil, dass die Steuerung in ihrer Ermittlung der Korrelationen zunehmend präziser wird, und dass die Gewichtung der gemessenen Werte der optischen Auswerteeinheit und der Sensoren fortlaufend für jede Pflanze angepasst wird.

Ein Ausführungsbeispiel der Erfindung mit verschiedenen Weiterbildungen und Ausgestaltungen ist in den Zeichnungen dargestellt und wird im Folgenden näher beschrieben. Es zeigen
- Fig.1: eine Pflanzenaufzuchteinrichtung im Querschnitt mit Sensoren und Einrichtungen in schematischer Ansicht, und
- Fig.2: zwei Pflanzenaufzuchteinrichtungen, die in der Art eines Regals übereinander angeordnet wurden.

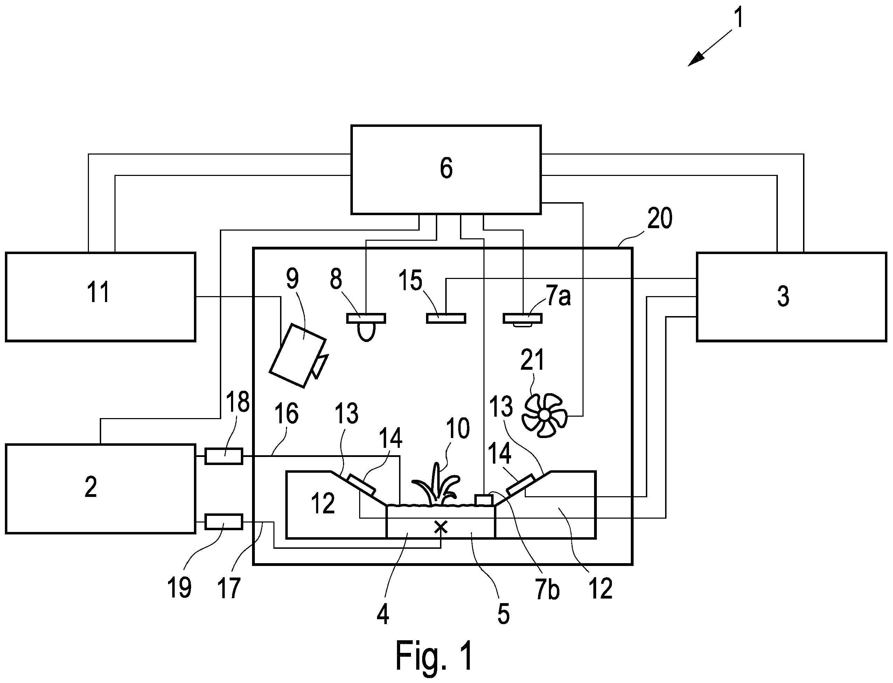

In Fig.1 ist eine Pflanzenaufzuchteinrichtung 1 zu sehen. Die Pflanzenaufzuchteinrichtung 1 besitzt eine Bewässerungsvorrichtung 2, eine Beleuchtungseinrichtung 3, einen Aufnahmeraum 4 zum Aufnehmen einer oder mehrerer Trägersubstrate 5 und Saatgut, eine Steuerungseinheit 6, die über eine Programmsteuerung die Bewässerungsvorrichtung 2 und die Beleuchtungseinrichtung 3 steuert, Feuchtesensoren 7a, 7b zum Messen der Luft- (7a) und Substratfeuchtigkeit (7b), einen CO2-Gassensor 8 und eine Kamera 9. Die Kamera 9 kann in der Lage sein, neben dem sichtbaren Spektrum auch das IR-Spektrum aufzunehmen und ist mit einer optischen Auswerteeinheit 11 verbunden. Der Aufnahmeraum 4 wird von einem Rahmen 12 begrenzt, der angeschrägte, dem Aufnahmeraum 4 zugewandte Seiten 13 besitzt, auf deren Fläche Leitungen verlaufen und mit der Beleuchtungseinrichtung 3 verbundene LEDs 14 liegen können. Der Neigungswinkel der dem Aufnahmeraum 4 zugewandten Fläche 13 kann dabei veränderbar ausgebildet sein, sodass der Beleuchtungswinkel der LEDs 14 variiert werden kann. Eine weitere LED 15 befindet sich oberhalb des Trägersubstrats 5 und ist in ihrer Höhe veränderbar. Der Neigungswinkel und die Höhe sind Parameter, die von der Beleuchtungseinrichtung 3 verändert werden können. Weitere Funktionen der Beleuchtungseinrichtung 3 umfassen ein Verändern der Abstrahlwinkel der LEDs 14, 15 und ein Verändern der Intensität und der spektralen Zusammensetzung des emittierten Lichts der LEDs 14, 15. Beispielhaft können die Rot- und Blauanteile, die UV-A-, UV-B- und UV-C-Anteile des UV-Spektrums und die IR-Anteile der LEDs 14, 15 von der Beleuchtungseinrichtung 3 veränderbar sein.

Die für die Bewässerung notwendigen Wasserleitungen 16, 17 der Bewässerungseinrichtung 2 sind in Fig. 1 nur schematisch dargestellt und können über offene Kanäle ausgebildet sein. Sensoren 18, 19 zur Messung eines Leitwertes und/oder eines pH-Wertes ermitteln die Qualität und Zusammensetzung des zu- und abgeführten Wassers.

Der Aufnahmeraum 4 mit Rahmen 12 und Trägersubstrat 5, der CO2-Gassensor 8, die Lichtquellen 14, 15, die Kamera 9 und die Feuchtesensoren 7a, 7b können von der Umgebungsluft durch eine Wand 20 aus Glas oder anderen Materialien getrennt sein. Außerdem kann eine von der Steuerungseinrichtung 6 steuerbare Ventilationseinrichtung 21 verbaut sein.

In der Pflanzenaufzuchteinrichtung 1 ist die optische Auswerteeinheit 11 in der Lage, mithilfe ihrer Kamera 9 die Pflanzen 10 hinsichtlich ihrer Art, ihres Wachstumsstadiums und ihres Vitalitätszustands zu analysieren und eine Diagnose im Falle eines Schimmelbefalls zu erstellen. Diese Daten werden der Steuerungseinheit 6 übermittelt. Die Art und das Wachstumsstadium der Pflanze 10, sowie der von dem Gassensor 8 gemessene CO2-Gehalt der Luft bilden einen Startwert für die Parameter, auf die die Steuerungseinrichtung 6 die Beleuchtungseinrichtung 3 stellt. Im Fall einer Schimmeldiagnose kann die Steuerungseinheit 6 das UV-Spektrum der LEDs 14, 15 der Beleuchtungseinheit 3 anschalten und/oder die Ventilationseinrichtung 21 anschalten. Ausgehend von dem Startwert wird nun über eine Software eine Korrelation zwischen den Beleuchtungsparametern, dem CO2-Gehalt der Luft, der Luft- und Substratfeuchtigkeit, der Wasserqualität und dem Wachstum der Pflanze 10 ermittelt. Wenn die optische Auswerteeinheit 11 erkennt, dass die Blätter der Pflanze 10 einen Schatten auf die darunterliegenden Teile der Pflanze 10 werfen, können die seitlich angebrachten LEDs 14 genutzt werden, um die Pflanze 10 entlang von Krümmungsradien wachsen zu lassen und die Nutzung der Fläche des Trägersubstrats 5 zu erhöhen. Besonders vorteilhaft ist es, wenn die Programmsteuerung der Steuerungseinrichtung 6 lernend oder selbstlernend ausgebildet ist und die Steuerung der Pflanzenaufzuchteinrichtung 1 vollautomatisch übernimmt.

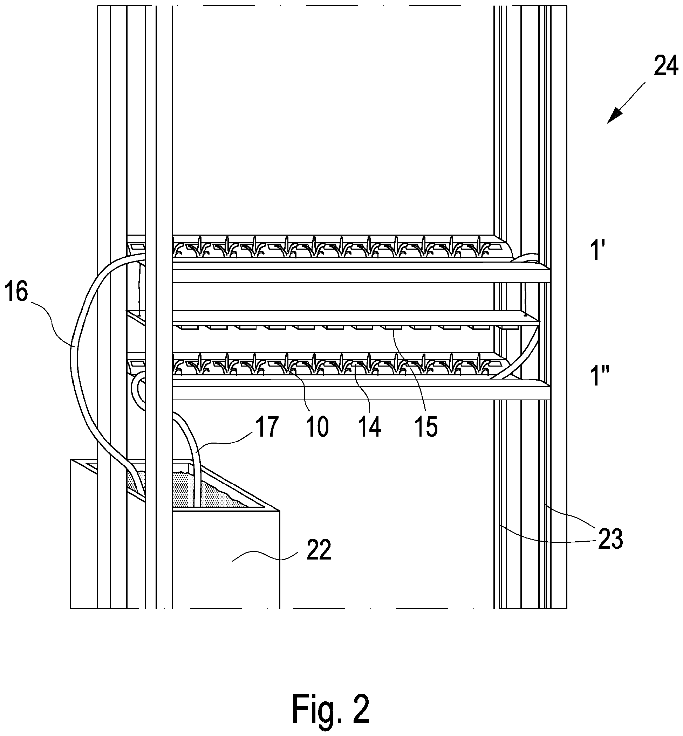

Der Ertrag pro Fläche kann weiter gesteigert werden, indem die Pflanzenaufzuchteinrichtung 1 modular vertikal erweiterbar ausgestaltet wird, wie in Fig. 2 gezeigt. Die obere Pflanzenaufzuchteinrichtung 1' muss dabei nicht die oberste Schiene sein, sondern es sind auch weitere Ebenen darüber denkbar. Der Einfachheit halber sind hier nicht sämtliche Komponenten der Pflanzenaufzuchteinrichtungen 1', 1" gezeigt. Die Schienen, die die Pflanzenaufzuchteinrichtungen 1', 1" tragen, sind in einem leichten Winkel einander zugeneigt, um den Durchlauf des Wassers zu fördern. Die Schienen sind stufenlos in den Kufen 23 des Regals 24 verstellbar. Das Verstellen kann mithilfe von kleinen, von der Steuerungseinheit 6 gesteuerten, hier nicht weiter gezeigten Elektromotoren erfolgen. In vorteilhafter Weise sind die LEDs 15 an der Unterseite der oberen Pflanzenaufzuchteinrichtung 1' direkt befestigt um Platz zu sparen.

### Bezugszeichenliste:

- 1:: Pflanzenaufzuchteinrichtung
- 2:: Bewässerungsvorrichtung
- 3:: Beleuchtungseinrichtung
- 4:: Aufnahmeraum
- 5:: Trägersubstrat
- 6:: Steuerungseinheit
- 7:: Feuchtesensoren
- 8:: Gassensor
- 9:: Kamera
- 10:: Pflanze
- 11:: Optische Auswerteeinheit
- 12:: Rahmen
- 13:: Angeschrägte Fläche
- 14:: LED
- 15:: LED
- 16:: Zuführende Wasserleitung
- 17:: Abführende Wasserleitung
- 18:: Wasserleitwertsensor
- 19:: Wasserleitwertsensor
- 20:: Wand
- 21:: Ventilationseinrichtung
- 22:: Wasserbehälter
- 23:: Kufen
- 24:: Regal

## Patentansprüche

1. Pflanzenaufzuchteinrichtung (1), aufweisend:
- eine Bewässerungsvorrichtung (2);
- eine Beleuchtungseinrichtung (3);
- einen Aufnahmeraum (4) zum Aufnehmen einer oder mehrerer Trägersubstrate (5) und Saatgut;
- eine Steuerungseinheit (6), die eingerichtet ist, mittels einer Programmsteuerung die Bewässerungsvorrichtung (2) und die Beleuchtungseinrichtung (3) zu steuern;
wobei die Beleuchtungseinrichtung (3) in ihren Beleuchtungsparametern veränderbar ist, **dadurch gekennzeichnet, dass** die Pflanzenaufzuchteinrichtung (1) eine optische Auswerteeinheit (11) zur Bestimmung der Pflanzenart und ihres Wachstumsstadiums, ihrer Vitalität und zur Diagnose von Schimmelbefall aufweist, und dass die Einrichtung zur Förderung des Pflanzenwachstums folgend einer ermittelten Korrelation zwischen den Beleuchtungsparametern und einer gemessenen Photosyntheserate und/oder einem gemessenen Pflanzenwachstum die Beleuchtungsparameter der Beleuchtungseinrichtung (3) anpasst und dass mehrere Lichtquellen (14, 15) oberhalb und/oder seitlich und/oder unterhalb der Pflanze (10) von der Steuerungseinheit (6) so gesteuert werden, dass die Wuchsrichtung der Pflanze (10) entlang von Krümmungsradien so gewählt wird, dass die Flächennutzung der Trägersubstrate (5) gesteigert wird, und dass die Pflanzenaufzuchteinrichtung (1) mit einer Erfassungseinheit zum Erfassen einer räumlichen Ausdehnung von Pflanzen (10) versehen ist, wobei die Erfassungseinheit so ausgebildet ist, dass die Erfassungseinheit die erfasste räumliche Ausdehnung der Pflanzen (10) an eine Auswerteeinheit übermitteln kann.

2. Pflanzenaufzuchteinrichtung (1) nach Anspruch 1,
**dadurch gekennzeichnet,**
**dass** die Beleuchtungseinrichtung (3) so ausgestaltet ist, dass Licht entlang voneinander verschiedener Lichtkegel eingestrahlt werden kann und dass Licht im Bereich eines ersten Lichtkegels, in dessen Bereich das Pflanzenwachstum stärker gesteigert werden soll als im Bereich eines zweiten Lichtkegels mit einer höheren Intensität eingestrahlt wird als im Bereich des zweiten Lichtkegels.

3. Pflanzenaufzuchteinrichtung (1) nach Anspruch 1 oder nach Anspruch 2,
**dadurch gekennzeichnet,**
**dass** die Auswerteeinheit so eingerichtet ist, dass sie einen Vergleich zwischen der erfassten räumlichen Ausdehnung der Pflanzen (10) und Sollwerten für die räumliche Ausdehnung der Pflanzen (10) durchführen kann und dass die Auswerteeinheit in Abhängigkeit des Vergleichs zwischen der erfassten räumlichen Ausdehnung der Pflanzen (10) und den Sollwerten für die räumliche Ausdehnung der Pflanzen (10) Daten für eine Anpassung der Beleuchtungsparameter generieren und an die Steuerungseinheit (6) übermitteln kann.

4. Pflanzenaufzuchteinrichtung (1) nach einem der vorigen Ansprüche, **dadurch gekennzeichnet, dass** die Beleuchtungseinrichtung (3) mehrere Lichtquellen (14, 15) oberhalb und/oder seitlich und/oder unterhalb der Pflanze (10) umfasst, dass die Lichtquellen (14, 15) sowohl sichtbares Licht, als auch Licht im UV- und IR-Spektrum emittieren können, und dass die von der Steuerungseinrichtung (6) veränderbaren Beleuchtungsparameter den Abstand der Lichtquellen (14, 15) zu den Pflanzen (10), den Abstrahlwinkel, die Intensität und die spektrale Zusammensetzung des emittierten sichtbaren und/oder unsichtbaren Lichts der Lichtquellen (14, 15) umfassen.

5. Pflanzenaufzuchteinrichtung (1) nacheinem der vorigen Ansprüche, **dadurch gekennzeichnet, dass** die Pflanzenaufzuchteinrichtung (1) einen Sensor zur Ermittlung der Photosyntheserate in Form eines CO2- und/oder ein O2-Gassensors (8) aufweist.

6. Pflanzenaufzuchteinrichtung (1) nach Anspruch 5, **dadurch gekennzeichnet, dass** die Pflanzenaufzuchteinrichtung (1) von der Außenluft abgeriegelt ist.

7. Pflanzenaufzuchteinrichtung (1) nach einem der vorangehenden Ansprüche, **dadurch gekennzeichnet, dass** die optische Auswerteeinheit (11) eine oder mehrere Kameras (9) umfasst, die neben dem sichtbaren Licht auch IR-Strahlung messen können.

8. Pflanzenaufzuchteinrichtung (1) nach einem der vorangehenden Ansprüche, **dadurch gekennzeichnet, dass** die optische Auswerteeinheit (11) anhand von Fluoreszenzmessungen die Photosyntheserate bestimmt.

9. Pflanzenaufzuchteinrichtung (1) nach einem der vorangehenden Ansprüche, **dadurch gekennzeichnet, dass** die Einrichtung eine von der Steuerungseinrichtung (6) regelbare Ventilationseinrichtung (21) zum Bestäuben von Blüten und/oder zum Befreien der Pflanzen (10) von Schimmelbefall, umfasst.

10. Pflanzenaufzuchteinrichtung (1) nach einem der vorangehenden Ansprüche, **dadurch gekennzeichnet, dass** die Bewässerungseinrichtung (2) durch offene Kanäle (16, 17) ausgebildet ist, und dass Sensoren (18, 19), insbesondere zur Messung eines Leitwerts und/oder eines pH-Wertes, zur Ermittlung der Qualität des zu- und abgeführten Wassers ausgebildet sind.

11. Pflanzenaufzuchteinrichtung (1) nach einem der vorangehenden Ansprüche, **dadurch gekennzeichnet, dass** die die Korrelation erfassende Steuereinheit ein PID-Regler ist, und dass die Beleuchtungseinheit so gesteuert wird, dass bei Erreichen einer Wachstumssättigung die Intensität der Lichtquellen (14, 15) nicht weiter erhöht wird.

12. Pflanzenaufzuchteinrichtung (1) nach einem der vorangehenden Ansprüche, **dadurch gekennzeichnet, dass** die Einrichtung in der Form eines Moduls vertikal erweiterbar ist.

13. Pflanzenaufzuchteinrichtung (1) nach einem der vorangehenden Ansprüche, **dadurch gekennzeichnet, dass** die Programmsteuerung der Steuerungseinrichtung (6) durch ein lernendes oder selbstlernendes System implementiert ist.

14. Verfahren zum Betreiben einer Pflanzenaufzuchteinrichtung (1), mit einer Beleuchtungseinrichtung (3), insbesondere zum Betreiben einer Pflanzenaufzuchteinrichtung (1) nach einem der vorigen Ansprüche,
**dadurch gekennzeichnet,**
**dass** Beleuchtungsparameter der Beleuchtungseinrichtung (3) angepasst werden und dass mehrere Lichtquellen (14, 15) oberhalb und/oder seitlich und/oder unterhalb der Pflanze (10) von der Steuerungseinheit (6) so gesteuert werden, dass die Wuchsrichtung der Pflanze (10) entlang von Krümmungsradien so gewählt wird, dass die Flächennutzung der Trägersubstrate (5) gesteigert wird,
**dass** einer Erfassungseinheit eine räumliche Ausdehnung von Pflanzen (10) erfasst, dass die Erfassungseinheit die erfasste räumliche Ausdehnung der Pflanzen (10) an eine Auswerteeinheit übermittelt,
**dass** eine optische Auswerteeinheit (11) der Pflanzenaufzuchteinrichtung (1) zur Bestimmung der Pflanzenart und ihres Wachstumsstadiums, ihrer Vitalität und zur Diagnose von Schimmelbefall eingesetzt wird und dass zur Förderung des Pflanzenwachstums folgend einer ermittelten Korrelation zwischen den Beleuchtungsparametern und der gemessenen Photosyntheserate und/oder dem gemessenen Pflanzenwachstum die Beleuchtungsparameter der Beleuchtungseinrichtung (3) anpasst werden.

15. Verfahren nach Anspruch 14,
**dadurch gekennzeichnet,**
**dass** die Beleuchtungsparameter der Beleuchtungseinrichtung (3) so angepasst werden, dass Licht entlang voneinander verschiedener Lichtkegel eingestrahlt wird und dass Licht im Bereich eines ersten Lichtkegels, in dessen Bereich das Pflanzenwachstum stärker gesteigert werden soll als im Bereich eines zweiten Lichtkegels mit einer höheren Intensität eingestrahlt wird als im Bereich des zweiten Lichtkegels.

16. Verfahren nach Anspruch 14 oder nach Anspruch 15,
**dadurch gekennzeichnet,**
**dass** die Auswerteeinheit einen Vergleich zwischen der erfassten räumlichen Ausdehnung der Pflanzen (10) und Sollwerten für die räumliche Ausdehnung der Pflanzen (10) durchführt und dass die Auswerteeinheit in Abhängigkeit des Vergleichs zwischen der erfassten räumlichen Ausdehnung der Pflanzen (10) und den Sollwerten für die räumliche Ausdehnung der Pflanzen (10) Daten für eine Anpassung der Beleuchtungsparameter generiert und an die Steuerungseinheit (6) übermittelt.

## Claims

1. Plant rearing device (1), comprising:
- an irrigation device (2);
- a lighting device (3);
- a receiving chamber (4) for receiving one or more carrier substrates (5) and seeds;
- a control unit (6) which is set up to control the watering device (2) and the lighting device (3) by means of a programme control;
wherein the lighting device (3) is variable in its lighting parameters, **characterised in that** the plant growing device (1) has an optical evaluation unit (11) for determining the plant species and its growth stage, its vitality and for diagnosing mould infestation, and **in that** the device for promoting plant growth adjusts the lighting parameters of the lighting device (3) in accordance with a determined correlation between the lighting parameters and a measured photosynthesis rate and/or a measured plant growth, and **in that** a plurality of light sources (14, 15) above and/or to the side and/or below the plant (10) are controlled by the control unit (6) in such a way that the direction of growth of the plant (10) along radii of curvature is selected in such a way that the area utilisation of the carrier substrates (5) is increased, and **in that** the plant rearing device (1) is provided with a detection unit for detecting a spatial extent of plants (10), the detection unit being designed in such a way that the detection unit can transmit the detected spatial extent of the plants (10) to an evaluation unit.

2. Plant rearing device (1) according to claim 1,
**characterised in that**
**in that** the lighting device (3) is designed in such a way that light can be irradiated along different light cones from one another and that light is irradiated with a higher intensity in the region of a first light cone, in the region of which plant growth is to be increased more strongly than in the region of a second light cone, than in the region of the second light cone.

3. Plant rearing device (1) according to claim 1 or according to claim 2, **characterised in that**
**in that** the evaluation unit is set up in such a way that it can perform a comparison between the detected spatial extent of the plants (10) and target values for the spatial extent of the plants (10) and **in that** the evaluation unit can generate data for adjusting the lighting parameters and transmit them to the control unit (6) as a function of the comparison between the detected spatial extent of the plants (10) and the target values for the spatial extent of the plants (10).

4. Plant rearing device (1) according to one of the preceding claims, **characterised in that** the lighting device (3) comprises a plurality of light sources (14, 15) above and/or to the side and/or below the plant (10), **in that** the light sources (14, 15) can emit both visible light and light in the UV and IR spectrum, and **in that** the lighting parameters which can be changed by the control device (6) comprise the distance of the light sources (14, 15) from the plants (10), the beam angle, the intensity and the spectral composition of the emitted visible and/or invisible light of the light sources (14, 15).

5. Plant rearing device (1) according to one of the preceding claims, **characterised in that** the plant rearing device (1) has a sensor for determining the photosynthesis rate in the form of a CO2 and/or an O2 gas sensor (8).

6. Plant rearing device (1) according to claim 5, **characterised in that** the plant rearing device (1) is sealed off from the outside air.

7. Plant rearing device (1) according to one of the preceding claims, **characterised in that** the optical evaluation unit (1 1) comprises one or more cameras (9) which, in addition to visible light, can also measure IR radiation.

8. Plant rearing device (1) according to one of the preceding claims, **characterised in that** the optical evaluation unit (11) determines the photosynthesis rate by means of fluorescence measurements.

9. Plant rearing device (1) according to one of the preceding claims, **characterised in that** the device comprises a ventilation device (21), which can be regulated by the control device (6), for pollinating flowers and/or for freeing the plants (10) from mould infestation.

10. Plant rearing device (1) according to one of the preceding claims, **characterised in that** the irrigation device (2) is formed by open channels (16, 17), and **in that** sensors (18, 19), in particular for measuring a conductance value and/or a pH value, are formed for determining the quality of the water supplied and discharged.

11. Plant rearing device (1) according to one of the preceding claims, **characterised in that** the control unit detecting the correlation is a PID controller, and **in that** the lighting unit is controlled in such a way that the intensity of the light sources (14, 15) is not increased further when growth saturation is reached.

12. Plant rearing device (1) according to one of the preceding claims, **characterised in that** the device is vertically expandable in the form of a module.

13. Plant rearing device (1) according to one of the preceding claims, **characterised in that** the program control of the control device (6) is implemented by a learning or self-learning system.

14. Method for operating a plant rearing device (1), with a lighting device (3), in particular for operating a plant rearing device (1) according to one of the preceding claims,
**characterised in that**
that illumination parameters of the illumination device (3) are adapted and that several light sources (14, 15) above and/or laterally and/or below the plant (10) are controlled by the control unit (6) in such a way that the direction of growth of the plant (10) is selected along radii of curvature, that the area utilisation of the carrier substrates (5) is increased, that a detection unit detects a spatial extent of plants (10), that the detection unit transmits the detected spatial extent of the plants (10) to an evaluation unit, **in that** an optical evaluation unit (1 1) of the plant-growing device (1) is used to determine the plant species and its growth stage, its vitality and to diagnose mould infestation, and **in that** the lighting parameters of the lighting device (3) are adjusted to promote plant growth in accordance with a determined correlation between the lighting parameters and the measured photosynthesis rate and/or the measured plant growth.

15. Method according to claim 14,
**characterised in that** the illumination parameters of the illumination device (3) are adapted in such a way that light is irradiated along light cones which are different from one another, and
that light in the area of a first light cone, in the area of which plant growth is to be increased more strongly than in the area of a second light cone, is irradiated with a higher intensity than in the area of the second light cone.

16. Method according to claim 14 or according to claim 15,
**characterised in that**
**in that** the evaluation unit carries out a comparison between the detected spatial extent of the plants (10) and target values for the spatial extent of the plants (10), and **in that** the evaluation unit generates data for adjusting the lighting parameters as a function of the comparison between the detected spatial extent of the plants (10) and the target values for the spatial extent of the plants (10) and transmits them to the control unit (6).

## Revendications

1. Dispositif de culture de plantes (1), comprenant :
- un dispositif d'irrigation (2) ;
- un dispositif d'éclairage (3) ;
- un espace de réception (4) pour recevoir un ou plusieurs substrats de support (5) et des semences ;
- une unité de commande (6) qui est conçue pour commander le dispositif d'arrosage (2) et le dispositif d'éclairage (3) au moyen d'une commande programmée ;
le dispositif d'éclairage (3) pouvant être modifié dans ses paramètres d'éclairage, **caractérisé en ce que** le dispositif de culture de plantes (1) présente une unité d'évaluation optique (11) pour déterminer le type de plante et son stade de croissance, sa vitalité et pour diagnostiquer une attaque de moisissure, et **en ce que** le dispositif destiné à favoriser la croissance des plantes adapte les paramètres d'éclairage du dispositif d'éclairage (3) en fonction d'une corrélation déterminée entre les paramètres d'éclairage et un taux de photosynthèse mesuré et/ou une croissance de plante mesurée, et **en ce que** plusieurs sources lumineuses (14, 15) au-dessus et/ou sur le côté et/ou en dessous de la plante (10) sont commandées par l'unité de commande (6) de telle sorte que la direction de croissance de la plante (10) le long de rayons de courbure est choisie de telle sorte que l'utilisation de la surface des substrats de support (5) est augmentée, et **en ce que** le dispositif de culture de plantes (1) est pourvu d'une unité de détection pour détecter une extension spatiale de plantes (10), l'unité de détection étant conçue de telle sorte que l'unité de détection peut transmettre l'extension spatiale détectée des plantes (10) à une unité d'évaluation.

2. Dispositif de culture de plantes (1) selon la revendication 1,
**caractérisé en ce que**
**en ce que** le dispositif d'éclairage (3) est conçu de telle sorte que la lumière peut être irradiée le long de différents cônes de lumière l'un par rapport à l'autre et **en ce que** la lumière est irradiée avec une intensité plus élevée dans la zone d'un premier cône de lumière, dans la zone duquel la croissance des plantes doit être augmentée plus fortement que dans la zone d'un deuxième cône de lumière, que dans la zone du deuxième cône de lumière.

3. Dispositif de culture de plantes (1) selon la revendication 1 ou selon la revendication 2,
**caractérisé en ce que**
**en ce que** l'unité d'évaluation est agencée de telle sorte qu'elle peut effectuer une comparaison entre l'extension spatiale détectée des plantes (10) et des valeurs de consigne pour l'extension spatiale des plantes (10) et **en ce que** l'unité d'évaluation peut générer des données pour une adaptation des paramètres d'éclairage en fonction de la comparaison entre l'extension spatiale détectée des plantes (10) et les valeurs de consigne pour l'extension spatiale des plantes (10) et les transmettre à l'unité de commande (6).

4. Dispositif de culture de plantes (1) selon l'une des revendications précédentes, **caractérisé en ce que** le dispositif d'éclairage (3) comprend plusieurs sources lumineuses (14, 15) au-dessus et/ou sur le côté et/ou en dessous de la plante (10), **en ce que** les sources lumineuses (14, 15) peuvent émettre aussi bien de la lumière visible que de la lumière dans les spectres UV et IR, et **en ce que** les paramètres d'éclairage modifiables par le dispositif de commande (6) comprennent la distance des sources lumineuses (14, 15) par rapport aux plantes (10), l'angle de rayonnement, l'intensité et la composition spectrale de la lumière visible et/ou invisible émise par les sources lumineuses (14, 15).

5. Dispositif de culture de plantes (1) selon l'une des revendications précédentes, **caractérisé en ce que** le dispositif de culture de plantes (1) présente un capteur pour déterminer le taux de photosynthèse sous la forme d'un capteur de gaz CO2 et/ou d'un capteur de gaz O2 (8).

6. Dispositif de culture de plantes (1) selon la revendication 5, **caractérisé en ce que** le dispositif de culture de plantes (1) est isolé de l'air extérieur.

7. Dispositif de culture de plantes (1) selon l'une des revendications précédentes, **caractérisé en ce que** l'unité d'évaluation optique (1 1) comprend une ou plusieurs caméras (9) qui, outre la lumière visible, peuvent également mesurer le rayonnement IR.

8. Dispositif de culture de plantes (1) selon l'une des revendications précédentes, **caractérisé en ce que** l'unité d'évaluation optique (11) détermine le taux de photosynthèse à l'aide de mesures de fluorescence.

9. Dispositif de culture de plantes (1) selon l'une des revendications précédentes, **caractérisé en ce que** le dispositif comprend un dispositif de ventilation (21) réglable par le dispositif de commande (6) pour polliniser les fleurs et/ou pour débarrasser les plantes (10) de la moisissure.

10. Dispositif de culture de plantes (1) selon l'une des revendications précédentes, **caractérisé en ce que** le dispositif d'irrigation (2) est formé par des canaux ouverts (16, 17), et **en ce que** des capteurs (18, 19), notamment pour la mesure d'une conductance et/ou d'une valeur de pH, sont formés pour déterminer la qualité de l'eau amenée et évacuée.

11. Dispositif de culture de plantes (1) selon l'une des revendications précédentes, **caractérisé en ce que** l'unité de commande détectant la corrélation est un régulateur PID, et **en ce que** l'unité d'éclairage est commandée de telle sorte que, lorsqu'une saturation de croissance est atteinte, l'intensité des sources lumineuses (14, 15) n'est pas augmentée davantage.

12. Dispositif de culture de plantes (1) selon l'une des revendications précédentes, **caractérisé en ce que** le dispositif est extensible verticalement sous la forme d'un module.

13. Dispositif de culture de plantes (1) selon l'une des revendications précédentes, **caractérisé en ce que** la commande par programme du dispositif de commande (6) est mise en oeuvre par un système d'apprentissage ou d'auto-apprentissage.

14. Procédé pour faire fonctionner un dispositif de culture de plantes (1), avec un dispositif d'éclairage (3), en particulier pour faire fonctionner un dispositif de culture de plantes (1) selon l'une des revendications précédentes,
**caractérisé en ce que**
**en ce que** des paramètres d'éclairage du dispositif d'éclairage (3) sont adaptés et **en ce que** plusieurs sources lumineuses (14, 15) au-dessus et/ou sur le côté et/ou en dessous de la plante (10) sont commandées par l'unité de commande (6) de telle sorte que la direction de croissance de la plante (10) est choisie le long de rayons de courbure, **en ce que** l'utilisation de la surface des substrats de support (5) est augmentée, **en ce qu'**une unité de détection détecte une extension spatiale de plantes (10), **en ce que** l'unité de détection transmet l'extension spatiale détectée des plantes (10) à une unité d'évaluation, qu'une unité d'évaluation optique (1 1) du dispositif de culture de plantes (1) est utilisée pour déterminer le type de plantes et leur stade de croissance, leur vitalité et pour diagnostiquer une attaque de moisissure et que, pour favoriser la croissance des plantes, les paramètres d'éclairage du dispositif d'éclairage (3) sont adaptés à la suite d'une corrélation déterminée entre les paramètres d'éclairage et le taux de photosynthèse mesuré et/ou la croissance mesurée des plantes.

15. Procédé selon la revendication 14,
**caractérisé en ce que** les paramètres d'éclairage du dispositif d'éclairage (3) sont adaptés de telle sorte que la lumière est irradiée le long de différents cônes de lumière les uns par rapport aux autres, et
**en ce que** la lumière est irradiée avec une intensité plus élevée dans la zone d'un premier cône de lumière, dans la zone duquel la croissance des plantes doit être augmentée plus fortement que dans la zone d'un deuxième cône de lumière, que dans la zone du deuxième cône de lumière.

16. Procédé selon la revendication 14 ou selon la revendication 15,
**caractérisé en ce que**
**que** l'unité d'évaluation effectue une comparaison entre l'extension spatiale détectée des plantes (10) et des valeurs de consigne pour l'extension spatiale des plantes (10) et que l'unité d'évaluation génère, en fonction de la comparaison entre l'extension spatiale détectée des plantes (10) et les valeurs de consigne pour l'extension spatiale des plantes (10), des données pour une adaptation des paramètres d'éclairage et les transmet à l'unité de commande (6).
